# EUROPÄISCHE PATENTANMELDUNG

(11) **EP 2 982 884 A1**
(43) Veröffentlichungstag der Anmeldung: **10.02.2016**
(21) Anmeldenummer: 15175378.7
(22) Anmeldetag: 06.07.2015
(51) Int. Cl.: F16H 3/64, F16H 3/66

(54) **KRAFTFAHRZEUGGRUPPENGETRIEBE**

(30) Priorität: 06.08.2014 DE 102014215551
(71) Anmelder: ZF Friedrichshafen AG, 88046 Friedrichshafen (DE)
(72) Erfinder: BECK, Stefan, 88097 Eriskirch (DE); WECHS, Michael, 88138 Weissenberg (DE); WARTH, Viktor, 88048 Friedrichshafen (DE)

(57) **Zusammenfassung**

Kraftfahrzeuggruppengetriebe (1) mit zumindest einem Gehäuse (2), einem Hauptgetriebe (3), und einem dem Hauptgetriebe (3) nachgeschalteten Nachschaltgetriebe (4); wobei das Hauptgetriebe (3) mindestens vier Planetenradsätze (7, 12, 17, 22), die jeweils mit ein Sonnenrad (8, 13, 18, 23), einen Steg (9, 14, 19, 24), ein auf dem Steg (9, 14, 19, 24) gelagertes Planetenrad (11, 16, 21, 26) und ein Hohlrad (10, 15, 20, 25) aufweisen, und mindestens fünf Schaltelemente (B1, B2, K1, K2, K3) umfasst; wobei das Nachschaltgetriebe (4) mindestens zwei Planetenradsätze (27, 32), die jeweils mit ein Sonnenrad (28, 33), einen Steg (29, 34), ein auf dem Steg (29, 34) gelagertes Planetenrad (31, 36) und ein Hohlrad (30, 35) aufweisen, und mindestens drei Schaltelemente (R, L, H) umfasst; und wobei das Hauptgetriebe (3) und das Nachschaltgetriebe (4) zusammen in Kombination mindestens dreizehn Vorwärtsgange und mindestens acht Rückwärtsgänge bereitstellen.

## Beschreibung

Die Erfindung betrifft ein Kraftfahrzeuggruppengetriebe.

In Nutzfahrzeugen kommen als Gruppengetriebe typischerweise Handschaltgetriebe oder auch automatisierte Handschaltgetriebe zum Einsatz. Solche Handschaltgetriebe sowie automatisierte Handschaltgetriebe verfügen über einen hohen Wirkungsgrad und geringe Anschaffungskosten. Schaltungen werden in solchen Handschaltgetrieben oder automatisierten Handschaltgetrieben zugkraftunterbrochen ausgeführt.

In Personenkraftwagen finden zunehmend Doppelkupplungsgetriebe Einsatz. In solchen Doppelkupplungsgetrieben können Schaltungen ohne Zugkraftunterbrechung ausgeführt werden. Doppelkupplungsgetriebe sind jedoch relativ groß und schwer und durch höhere Anschaffungskosten gekennzeichnet. Ferner sind Doppelkupplungsgetriebe nur eingeschränkt als Gruppengetriebe nutzbar, da sich infolgedessen, dass bei Gruppengetriebe eine nahezu geometrische Gangstufung wünschenswert ist, bei Verwendung eines Doppelkupplungsgetriebes in den unteren Gängen Gangsprünge zu niedrig sind und daher eine zu hohe Anzahl von Schaltungen in den unteren Gängen erforderlich wäre. Dies liegt auch darin begründet, dass bei einem Doppelkupplungsgetriebe einzelne Gänge systembedingt nicht übersprungen werden können.

Aus der DE 10 2011 087 947 A1 ist ein Gruppengetriebe aus einem Hauptgetriebe und einen dem Hauptgetriebe nachgeschalteten Nachschaltgetriebe bekannt, wobei das Hauptgetriebe zwei Planetenradsätze bzw. Planetenradstufen und vier formschlüssige Schaltelemente und das Nachschaltgetriebe ebenfalls zwei Planetenradsätze bzw. Planetenradstufen und vier formschlüssige Schaltelemente aufweist.

Es besteht Bedarf an einem Kraftfahrzeuggruppengetriebe, welches bei kompakter Bauform und großer Spreizung sowie hohem Wirkungsgrad eine hohe Anzahl an Gängen mit annährend geometrischer Gangstufung bereitstellen kann.

Hiervon ausgehend liegt der vorliegenden Erfindung die Aufgabe zu Grunde, ein neuartiges Kraftfahrzeuggruppengetriebe zu schaffen.

Diese Aufgabe wird durch ein Kraftfahrzeuggruppengetriebe gemäß Patentanspruch 1 gelöst.

Das erfindungsgemäße Kraftfahrzeuggruppengetriebe weist ein Gehäuse, ein Hauptgetriebe und ein dem Hauptgetriebe nachgeschaltetes Nachschaltgetriebe auf, wobei das Hauptgetriebe mindestens vier Planetenradsätze, die jeweils mit ein Sonnenrad, einen Steg, ein auf dem Steg gelagertes Planetenrad und ein Hohlrad aufweisen, und mindestens fünf Schaltelemente umfasst; wobei das Nachschaltgetriebe mindestens zwei Planetenradsätze, die jeweils mit ein Sonnenrad, einen Steg, ein auf dem Steg gelagertes Planetenrad und ein Hohlrad aufweisen, und mindestens drei Schaltelemente umfasst; wobei das Hauptgetriebe und das Nachschaltgetriebe zusammen in Kombination mindestens dreizehn Vorwärtsgange und mindestens acht Rückwärtsgänge bereitstellen.

Mit Hilfe des erfindungsgemäßen Kraftfahrzeuggruppengetriebes können bei großer Spreizung, hohem Wirkungsgrad und kompakter Bauweise eine hohe Anzahl von Gängen mit nahezu geometrischer Gangstufung bereitgestellt werden.

Nach einer vorteilhaften Weiterbildung ist ein Sonnenrad eines dem Hauptgetriebe zugeordneten ersten Planetenradsatzes unter Zwischenschaltung eines dem Hauptgetriebe zugeordneten ersten Schaltelements an das Gehäuse koppelbar; wobei ein Steg eines dem Hauptgetriebe zugeordneten zweiten Planetenradsatzes permanent an eine antriebsseitige Welle des Kraftfahrzeuggruppengetriebes gekoppelt; wobei ein Hohlrad des zweiten Planetenradsatzes permanent an ein Sonnerad eines dem Hauptgetriebe zugeordneten dritten Planetenradsatzes gekoppelt ist; wobei ein Steg eines dem Hauptgetriebe zugeordneten vierten Planetenradsatzes permanent an ein Sonnenrad eines dem Nachschaltgetriebe zugeordneten fünften Planetenradsatzes gekoppelt ist; wobei ein Hohlrad des fünften Planetenradsatzes permanent an ein Sonnenrad eines dem Nachschaltgetriebe zugeordneten sechsten Planetenradsatzes und ein Steg des fünften Planetenradsatzes permanent an ein Hohlrad des sechsten Planetenradsatzes gekoppelt ist; wobei ein Steg des sechsten Planetenradsatzes permanent an eine antriebsseitige Welle des Kraftfahrzeuggruppengetriebes gekoppelt ist; wobei, wenn der erste Planetenradsatz als Minus-Planetenradsatz ausgeführt ist, ein, dem Hauptgetriebe zugeordnetes zweites Schaltelement entweder zwischen ein Hohlrad des ersten Planetenradsatzes und das Gehäuse oder zwischen den Steg des ersten Planetenradsatzes und das Hohlrad des vierten Planetenradsatzes oder zwischen das Sonnenrad des ersten Planetenradsatzes und das erste Schaltelement geschaltet ist, oder, wenn der erste Planetenradsatz als Plus-Planetenradsatz ausgeführt ist, entweder zwischen den Steg des ersten Planetenradsatzes und das Gehäuse oder zwischen das Hohlrad des ersten Planetenradsatzes und das Hohlrad des vierten Planetenradsatzes, oder zwischen das Sonnenrad des ersten Planetenradsatzes und das erste Schaltelement geschaltet ist; wobei ein dem Hauptgetriebe zugeordnetes drittes Schaltelement entweder zwischen das Sonnenrad des dritten Planetenradsatzes und das Hohlrad des dritten Planetenradsatzes oder zwischen das Sonnenrad des dritten Planetenradsatzes und den Steg des dritten Planetenradsatzes oder zwischen den Steg des dritten Planetenradsatzes und das Hohlrad des dritten Planetenradsatzes geschaltet ist; wobei ein dem Hauptgetriebe zugeordnetes viertes Schaltelement zwischen das Hohlrad des dritten Planetenradsatzes und die antriebsseitige Welle des Kraftfahrzeuggruppengetriebes geschaltet ist; wobei ein dem Hauptgetriebe zugeordnetes fünftes Schaltelement entweder zwischen den Steg des dritten Planetenradsatzes und den Steg des vierten Planetenradsatzes oder zwischen das Hohlrad des dritten Planetenradsatzes und das Sonnenrad des vierten Planetenradsatzes geschaltet ist; wobei der Steg des fünften Planetenradsatzes und das Hohlrad des fünften Planetenradsatzes abhängig von Schaltelementen des Nachschaltgetriebes entweder an das Gehäuse oder untereinander gekoppelt sind.

Diese Ausgestaltung der Planetenradsätze von Hauptgetriebe und Nachschaltgetriebe sowie die Verschaltung der Schaltelemente von Hauptgetriebe und Nachschaltgetriebe mit den Planetenradsätzen ist zur Bereitstellung eines Kraftfahrzeuggruppengetriebes mit kompakter Bauform, hohem Wirkungsgrad, großer Spreizung und hohen Anzahl an Gängen bei annähernd geometrischer Gangstufung von Vorteil.

Vorzugsweise sind die Schaltelemente des Hauptgetriebes reibschlüssige Schaltelemente und die Schaltelemente des Nachschaltgetriebes formschlüssige Schaltelemente. Die Schaltelemente des Hauptgetriebes werden demnach vorzugsweise als Lastschaltelemente ausgeführt. Bei den Schaltelementen des Nachschaltgetriebes handelt es sich vorzugsweise um formschlüssige Schaltelemente.

Bevorzugte Weiterbildungen ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema eines ersten erfindungsgemäßen Kraftfahrzeuggruppengetriebe;
- Fig. 2: eine Schaltmatrix für das Kraftfahrzeuggruppengetriebe der Fig. 1;
- Fig. 3: eine weitere Schaltmatrix für das Kraftfahrzeuggruppengetriebe der Fig. 1;
- Fig. 4: ein Schema eines zweiten erfindungsgemäßen Kraftfahrzeuggruppengetriebes;
- Fig. 5: ein Schema eines dritten erfindungsgemäßen Kraftfahrzeuggruppengetriebes;
- Fig. 6: ein Schema eines vierten erfindungsgemäßen Kraftfahrzeuggruppengetriebes;
- Fig. 7: ein Schema eines fünften erfindungsgemäßen Kraftfahrzeuggruppengetriebes;
- Fig. 8: ein Schema eines sechsten erfindungsgemäßen Kraftfahrzeuggruppengetriebes;
- Fig. 9: ein Schema eines siebten erfindungsgemäßen Kraftfahrzeuggruppengetriebes;
- Fig. 10: ein Schema eines achten erfindungsgemäßen Kraftfahrzeuggruppengetriebes;
- Fig. 11: ein Schema eines neunten erfindungsgemäßen Kraftfahrzeuggruppengetriebes;
- Fig. 12: ein Schema eines zehnten erfindungsgemäßen Kraftfahrzeuggruppengetriebes; und
- Fig. 13: ein Schema eines weiteren erfindungsgemäßen Kraftfahrzeuggruppengetriebes.

Die hier vorliegende Erfindung betrifft ein Kraftfahrzeuggruppengetriebe.

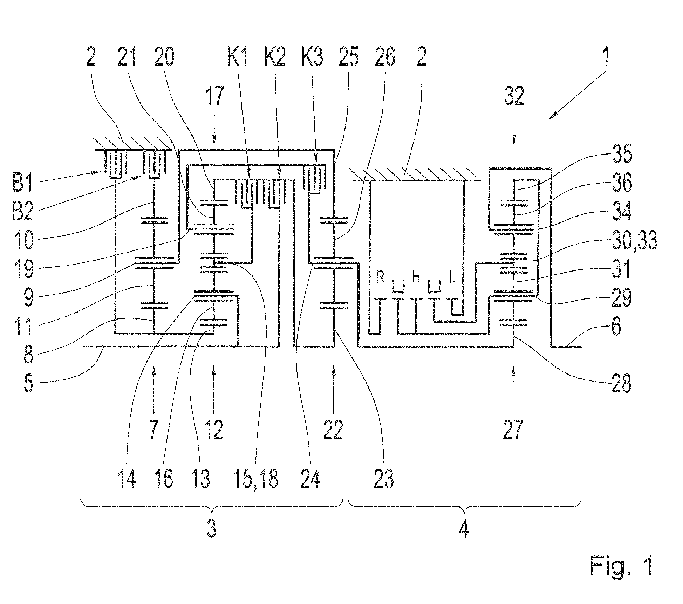

Fig. 1 zeigt ein erstes Ausführungsbeispiel eines erfindungsgemäßen Kraftfahrzeuggruppengetriebes 1. Das Kraftfahrzeuggruppengetriebe 1 gemäß Fig. 1 umfasst ein Gehäuse 2, ein Hauptgetriebe 3 und ein dem Hauptgetriebe 3 antriebsseitig nachgeschaltetes Nachschaltgetriebe 4. Eine antriebsseitige Welle 5 des Kraftfahrzeuggruppengetriebes 1 wird vom Hauptgetriebe 3 und eine abtriebsseitige Welle 6 des Kraftfahrzeuggruppengetriebes 1 vom Nachschaltgetriebe 4 bereitgestellt.

Das Hauptgetriebe 3 umfasst vier Planetenradstufen bzw. Planetenradsätze 7, 12, 17 und 22 sowie fünf Schaltelemente B1, B2, K1, K2 und K3, die im gezeigten, bevorzugten Ausführungsbeispiel allesamt als reibschlüssige Lastschaltelemente ausgeführt sind. Wie weiter unten noch im Detail beschrieben werden wird, umfasst jede der Planetenradstufen 7, 12, 17 und 22 des Hauptgetriebes 3 ein Sonnenrad, einen Steg, ein auf dem Steg gelagertes Planetenrad und ein Hohlrad.

Das Nachschaltgetriebe 4 umfasst zwei Planetenradstufen bzw. Planetenradsätze 27 und 32 und drei Schaltelemente R, H und L, wobei es sich im gezeigten Ausführungsbeispiel bei den Schaltelementen R, H und L des Nachschaltgetriebes 4 allesamt um formschlüssige Schaltelemente handelt.

Wie weiter unten im Detail beschrieben werden wird, kann mit einem solchen Kraftfahrzeuggruppengetriebe 1 durch die Kombination des Hauptgetriebes 3 und das Nachschaltgetriebes 4 eine hohe Anzahl an Gängen bei großer Spreizung, hohem Wirkungsgrad und kompakter Bauweise mit annähernd geometrischer Gangstufung bereitgestellt werden, nämlich mindestens 13 Vorwärtsgänge und mindestens 8 Rückwärtsgänge.

In der nachfolgenden Beschreibung wird der Begriff Planetenradstufen verwendet. Planetenradstufen werden auch als Planetenradsätze bezeichnet.

In Ausführungsbeispiel der Fig. 1 umfasst die dem Hauptgetriebe 3 zugeordnete erste Planetenradstufe 7 ein Sonnenrad 8, einen Steg 9, ein Hohlrad 10 und ein auf dem Steg 9 gelagertes Planetenrad 11.

Die dem Hauptgetriebe 3 zugeordnete zweite Planetenradstufe 12 umfasst einen Sonnenrad 13, einen Steg 14, ein Hohlrad 15 und ein auf dem Steg 14 gelagertes Planetenrad 16.

Die dem Hauptgetriebe 3 zugeordnete dritte Planetenradstufe 17, die im Ausführungsbeispiel der Fig. 1 radial neben der zweiten Planetenradstufe 12 positioniert ist, umfasst ebenfalls ein Sonnenrad 18, einen Steg 19, ein Hohlrad 20 und ein auf dem Steg 19 gelagertes Planetenrad 21, wobei das Hohlrad 15 der zweiten Planetenradstufe 12 und das Sonnenrad 18 der dritten Planetenradstufe 17 von ein und demselben Bauteil bereitgestellt werden und demnach permanent gekoppelt sind.

Die dem Hauptgetriebe 3 zugeordnete vierte Planetenradstufe 22 umfasst ein Sonnenrad 23, einen Steg 24, ein Hohlrad 25 und ein auf dem Steg 24 gelagertes Planetenrad 26.

Das Kraftfahrzeuggruppengetriebe 1 umfasst zusätzlich zu den vier Planetenradstufen 7, 12, 17 und 22 des Hauptgetriebes 3 zwei Planetenradstufen 27 und 32 des Nachschaltgetriebes 4.

So umfasst die dem Nachschaltgetriebe 4 zugeordnete fünfte Planetenradstufe 27 ein Sonnenrad 28, einen Steg 29, ein Hohlrad 30 und ein auf dem Steg 29 gelagertes Planetenrad 31, wobei die dem Nachschaltgetriebe 4 zugeordnete sechste Planetenradstufe 32 ebenfalls ein Sonnenrad 33, einen Steg 34, ein Hohlrad 35 und ein auf dem Steg 34 gelagertes Planetenrad 36 aufweist.

Im Ausführungsbeispiel der Fig. 1 sind die beiden Planetenradstufen 27 und 32 des Nachschaltgetriebes 4 wiederum radial nebeneinander angeordnet, wobei das Hohlrad 30 der fünften Planetenradstufe 27 und das Sonnenrad 33 der sechsten Planetenradstufe 32 von ein und demselben Bauteil bereitgestellt sind und demnach permanent gekoppelt sind.

Der Steg 14 der dem Hauptgetriebe 2 zugeordneten zweiten Planetenradstufe 12 des Kraftfahrzeuggruppengetriebes 1 ist permanent an die antriebsseitige Welle 5 des Kraftfahrzeuggruppengetriebes gekoppelt.

Wie bereits ausgeführt, ist das Hohlrad 15 der zweiten Planetenradstufe 12 permanent an das Hohlrad 18 der dritten Planetenradstufe 17 gekoppelt, wobei Hohlrad 15 der zweiten Planetenradstufe 12 und Sonnenrad 18 der dritten Planetenradstufe 17 im Ausführungsbeispiel der Fig. 1 von ein und derselben Baugruppe bereitgestellt sind.

Der Steg 24 der vierten Planetenradstufe 22 des Hauptgetriebes 3 ist permanent an das Sonnenrad 28 der dem Nachschaltgetriebe 4 zugeordneten fünften Planetenradstufe 27 gekoppelt. Wie bereits ausgeführt, sind das Hohlrad 30 der fünften Planetenradstufe 27 und das Sonnenrad 33 der sechsten Planetenradstufe 32 permanent aneinander gekoppelt, ferner sind der Steg 29 der fünften Planetenradstufe 27 und das Hohlrad 35 der sechsten Planetenradstufe 32 permanent aneinander gekoppelt. Der Steg 34 der sechsten Planetenradstufe 27, die Bestandteil des Nachschaltgetriebes 4 ist, ist permanent an die abtriebsseitige Welle 5 des Kraftfahrzeuggruppengetriebes 1 gekoppelt.

Ein erstes Schaltelement B1 des Hauptgetriebes 3 ist zwischen das Gehäuse 12 und das Sonnenrad 8 der ersten Planetenradstufe 7 geschaltet, nämlich derart, dass dann, wenn das erste Schaltelement B1 geschlossen ist, das Sonnenrad 8 der ersten Planetenradstufe 7 an das Gehäuse 2 gekoppelt ist, wohingegen dann, wenn das erste Schaltelement B1 geöffnet ist, das Sonnenrad 8 der ersten Planetenradstufe 7 vom Gehäuse 2 des Kraftfahrzeuggruppengetriebes 1 abgekoppelt ist.

Im Ausführungsbeispiel der Fig. 1 ist ein zweites Schaltelement B2 des Hauptgetriebes 3 zwischen das Hohlrad 10 der ersten Planetenradstufe 7 und das Gehäuse 2 geschaltet, nämlich derart, dass dann, wenn das zweite Schaltelement B2 geschlossen ist, das Hohlrad 10 der ersten Planetenradstufe 7 an das Gehäuse 2 angebunden ist, wohingegen dann, wenn dieses zweite Schaltelement B2 geöffnet ist, das Hohlrad 10 der ersten Planetenradstufe 7 vom Gehäuse 2 des Kraftfahrzeuggruppengetriebes 1 abgekoppelt ist. Dann, wenn wie in Fig. 1 gezeigt, das zweite Schaltelement B2 zwischen das Hohlrad 10 der ersten Planetenradstufe 7 und das Gehäuse 2 geschaltet ist, ist der Steg 9 der ersten Planetenradstufe 7 permanent an das Hohlrad 25 der vierten Planetenradstufe 22 des Hauptgetriebes 3 gekoppelt, ferner ist das Sonnenrad 8 der ersten Planetenradstufe 7 unter Zwischenschaltung ausschließlich des ersten Schaltelements B1 an das Gehäuse 2 koppelbar.

Ein drittes Schaltelement K1 des Hauptgetriebes 3 ist im Ausführungsbeispiel der Fig. 1 zwischen das Sonnenrad 18 der dritten Planetenradstufe 17 und das Hohlrad 20 der dritten Planetenradstufe 17 geschaltet. Dann, wenn dieses dritte Schaltelement K1 geschlossen ist, sind das Sonnenrad 18 und Hohlrad 20 der dritten Planetenradstufe 17 aneinander gekoppelt.

Ein viertes Schaltelement K2 des Hauptgetriebes 3 ist zwischen das Hohlrad 20 der dritten Planetenradstufe 17 und die antriebsseitige Welle 5 des Kraftfahrzeuggruppengetriebes 1 geschaltet. Dann, wenn dieses vierte Schaltelement K2 geschlossen ist, besteht eine Verbindung zwischen antriebsseitiger Welle 5 und Hohlrad 20 der dritten Planetenradstufe 17.

Ein fünftes Schaltelement K3 des Hauptgetriebes 2 ist im Ausführungsbeispiel der Fig. 1 zwischen den Steg 19 der dritten Planetenradstufe 17 und den Steg 24 der vierten Planetenradstufe 22 geschaltet. Dann, wenn dieses fünfte Schaltelement K3 geöffnet ist, sind diese beiden Stege 19 und 24 der beiden Planetenradstufen 17 und 22 voneinander getrennt. Dann hingegen, wenn dieses fünfte Schaltelement K3 geschlossen ist, sind die beiden Stege 19 und 24 von dritter Planetenradstufe 17 und vierter Planetenradstufe 22 aneinander gekoppelt. Dann, wenn das fünfte Schaltelement K3, wie in Fig. 1 gezeigt, zwischen dem Steg 19 der dritten Planetenradstufe 17 und dem Steg 24 der vierten Planetenradstufe 22 geschaltet ist, ist das Hohlrad 20 der dritten Planetenradstufe 17 permanent an das Sonnenrad 23 der vierten Planetenradstufe 22 gekoppelt.

Der Steg 29 der fünften Planetenradstufe 27 des Nachschaltgetriebes 4 und das Hohlrad 30 der fünften Planetenradstufe 27 des Nachschaltgetriebes 4 sind abhängig von den Schaltelementen R, H und L des Nachschaltgetriebes 4 entweder an das Gehäuse 2 oder untereinander gekoppelt.

Dann, wenn das Schaltelement H für die High-Fahrstufe des Nachschaltgetriebes 4 geschlossen ist, sind Steg 29 und Hohlrad 30 der fünften Planetenradstufe 27 aneinander gekoppelt. Dann, wenn das Schaltelement L für die Low-Fahrstufe des Nachschaltgetriebes 4 geschlossen ist, ist ausschließlich das Hohlrad 30 der fünften Planetenradstufe 27 jedoch nicht der Steg 29 an das Gehäuse 2 gekoppelt.

Dann, wenn das Schaltelement R für Rückwärtsgänge geschlossen ist, ist ausschließlich der Steg 29 der fünften Planetenradstufe 27, jedoch nicht das Hohlrad 30 derselben an das Gehäuse 2 gekoppelt.

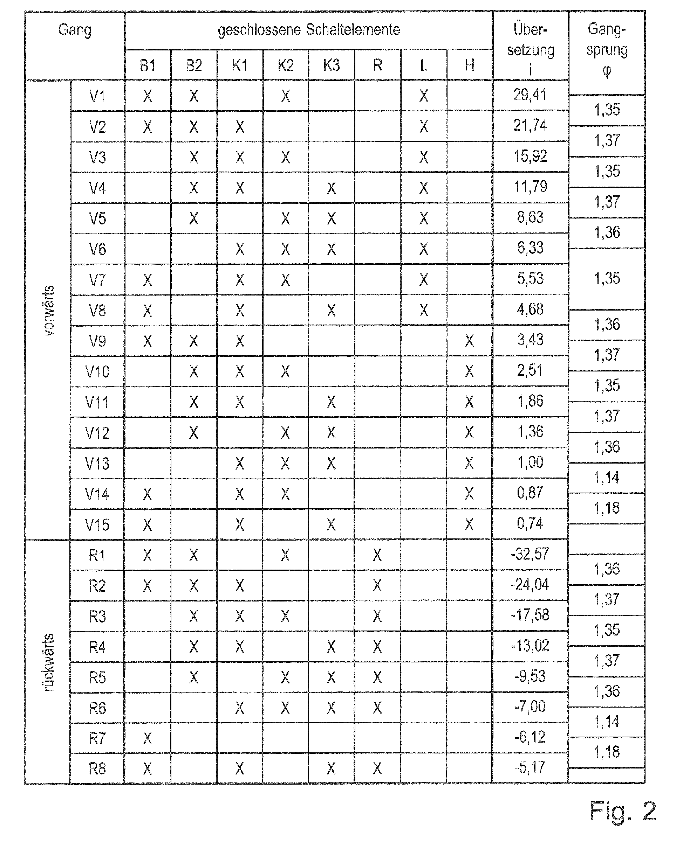

Das Kraftfahrzeuggruppengetriebe 1 der Fig. 1 kann die in Fig. 2 gezeigte Schaltmatrix mit fünfzehn Vorwärtsgängen V1 bis V15 und acht Rückwärtsgängen R1 bis R8 nutzen. Schaltelemente B1, B2, K1, K2, K3, R, L und H des Kraftfahrzeuggruppengetriebes 1, die im jeweiligen Gang geschlossen sind, sind in der Schaltmatrix mit einem X gekennzeichnet, wobei die Schaltmatrix der Fig. 2 15 Vorwärtsgänge und 8 Rückwärtsgänge nutzt. Die in der Schaltmatrix der Fig. 2 angegebenen Übersetzungen i und Gangsprünge ϕ ergeben sich dann, wenn für die erste Planetenradstufe 7 ein Standgetriebeübersetzung i0 = -3,290, für die zweite Planetenradstufe 12 eine Standgetriebeübersetzung i0 = -2,820, für die dritte Planetenradstufe 17 eine Standgetriebeübersetzung i0 = -1,450, für die vierte Planetenradstufe 22 eine Standgetriebeübersetzung i0 = -3,650, für die fünfte Planetenradstufe 27 des Nachschaltgetriebes 26 eine Standgetriebeübersetzung i0 = -2,800 und für die sechste Planetenradstufe 32 eine Standgetriebeübersetzung i0 = -1,500 gewählt wird.

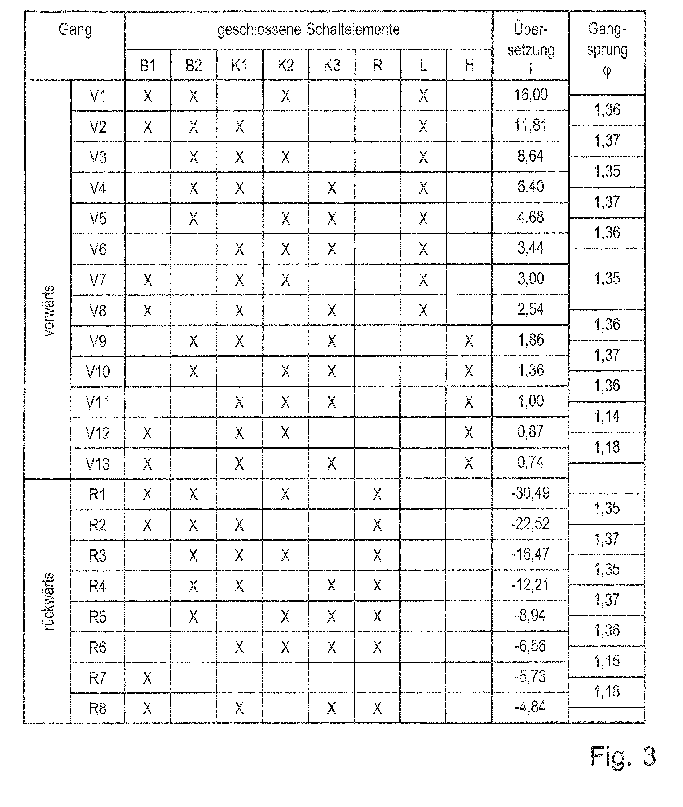

Eine weitere Schaltmatrix mit dreizehn Vorwärtsgängen V1 bis V13 und acht Rückwärtsgängen R1 bis R8, die das Kraftfahrzeuggruppengetriebe 1 der Fig. 1 nutzen kann, zeigt Fig. 3. Die Schaltmatrix der Fig. 3 nutzt 13 Vorwärtsgänge und 8 Rückwärtsgänge, wobei Schaltelemente B1, B2, K1, K2, K3, R, L und H, die im jeweiligen Gang geschlossen sind, wieder um durch ein X gekennzeichnet sind. Die Übersetzungen i und Gangsprünge ϕ der Schaltmatrix der Fig. 3 ergeben sich dann, wenn für die erste Planetenradstufe 7 eine Standgetriebeübersetzung i0 = -3,290, für die zweite Planetenradstufe 12 eine Standgetriebeübersetzung i0 = -2,820, für die dritte Planetenradstufe 17 eine Standgetriebeübersetzung i0 = -1,450, für die vierte Planetenradstufe 22 eine Standgetriebeübersetzung i0 = -3,650, für die fünfte Planetenradstufe 27 eine Standgetriebeübersetzung i0 = -1,600 und für die sechste Planetenradstufe 32 eine Standgetriebeübersetzung i0 = -3,100 gewählt wird.

Die Standgetriebeübersetzungen der Planetenradstufen 7, 12, 17, 22, 27 und 32 sind prinzipiell frei wählbar und können dem gewünschten Einsatzzweck des Kraftfahrzeuggruppengetriebes 1 angepasst werden.

Theoretisch können mit der Getriebestruktur der Fig. 16 Vorwärtsgänge und 8 Rückwärtsgänge realisiert werden. Die Getriebestruktur zeichnet durch einen hohen Verzahnungswirkungsgrad, einen geringen Bauaufwand und eine kompakte Bauweise aus. Gangsprünge bzw. Gangstufungen sind nahezu geometrisch. Es können eine hohe Anzahl lastschaltbarer Gänge bereitgestellt werden. Bauteilbelastungen sind gering. Untere Gänge können mehrfach geschaltet werden. Die Getriebestruktur verfügt über eine hohe Spreizung. Eine Parksperrenfunktion ist dann realisierbar, wenn die beiden Schaltelemente L und R des Nachschaltgetriebes vier gleichzeitig geschlossen sind.

Als Anfahrelement für das Kraftfahrzeuggruppengetriebe 1 kann ein hydrodynamischer Drehmomentwandler, eine hydrodynamische Kupplung, eine zusätzliche Anfahrkupplung, eine integrierte Anfahrkupplung oder eine zusätzliche elektrische Maschine benutzt werden.

Eine elektrische Maschine kann grundsätzlich auf jeder Welle des Kraftfahrzeuggruppengetriebes 1 angeordnet werden.

An jeder Welle des Kraftfahrzeuggruppengetriebes 1 kann weiterhin grundsätzlich ein Freilauf zum Gehäuse oder zu einer anderen Welle des Kraftfahrzeuggruppengetriebes 1 angeordnet werden.

Wie bereits ausgeführt, sind die Schaltelemente B1, B2, K1, K2 und K3 des Hauptgetriebes 3 allesamt gemäß Fig. 1 als reibschlüssige Schaltelemente und die Schaltelemente R, H und L des Nachschaltgetriebes 4 allesamt als formschlüssige Schaltelemente ausgeführt. Obwohl diese Ausgestaltung von Vorteil ist, ist es grundsätzlich möglich, alle Schaltelemente je nach Anforderung an das Kraftfahrzeuggruppengetriebe sowohl als formschlüssige Schaltelemente als auch als reibschlüssige Schaltelemente auszuführen. Zur Gewährleistung der Lastschaltbarkeit des Hauptgetriebes sind jedoch die Schaltelemente des Hauptgetriebes 3 vorzugsweise als reibschlüssige Schaltelemente ausgeführt. Ist für das Kraftfahrzeuggruppengetriebe 1 ein Reversieren von vorwärts nach rückwärts oder eine Lastschaltung zwischen den beiden Gruppen des Gruppengetriebes erforderlich, können auch die Schaltelemente des Nachschaltgetriebes R, H und L als reibschlüssige Schaltelemente ausgeführt werden.

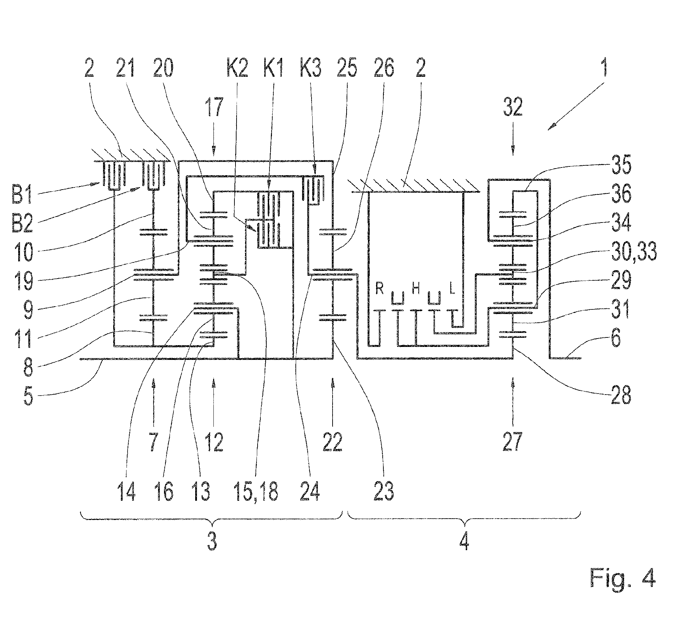

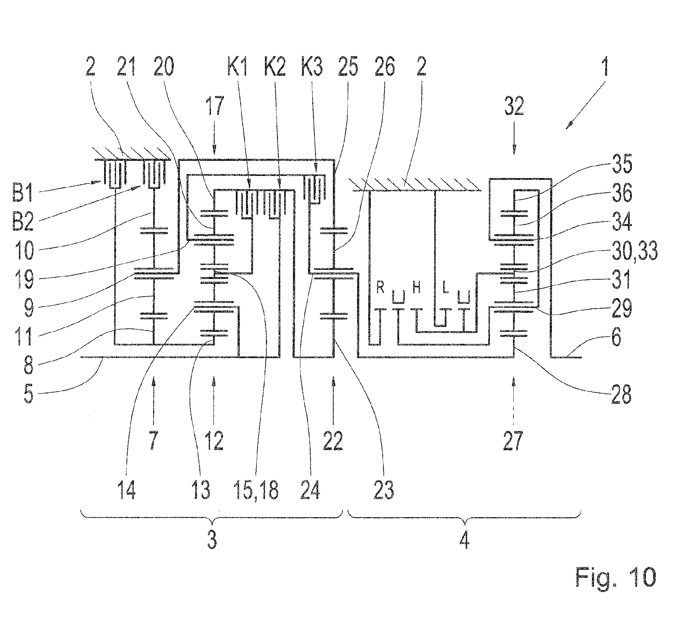

Fig. 4 bis 13 zeigen Abwandlungen des Kraftfahrzeuggruppengetriebes 1 der Fig. 1. Nachfolgend wird nur auf solche Details eingegangen, durch die sich diese Abwandlungen von der Ausführungsform der Fig. 1 unterscheiden. Hinsichtlich übriger Details wird zur Vermeidung unnötiger Wiederholungen auf die obigen Ausführungen Bezug genommen. Für gleiche Baugruppen sind gleiche Bezugszeichen verwendet.

In der Variante der Fig. 4 sind die beiden Schaltelemente K1 und K2 im Unterschied zur Fig. 1 nicht axial nebeneinander sondern radial übereinander geschachtelt angeordnet. Hinsichtlich der übrigen Details stimmt das Ausführungsbeispiel der Fig. 4 mit dem Ausführungsbeispiel der Fig. 1 überein.

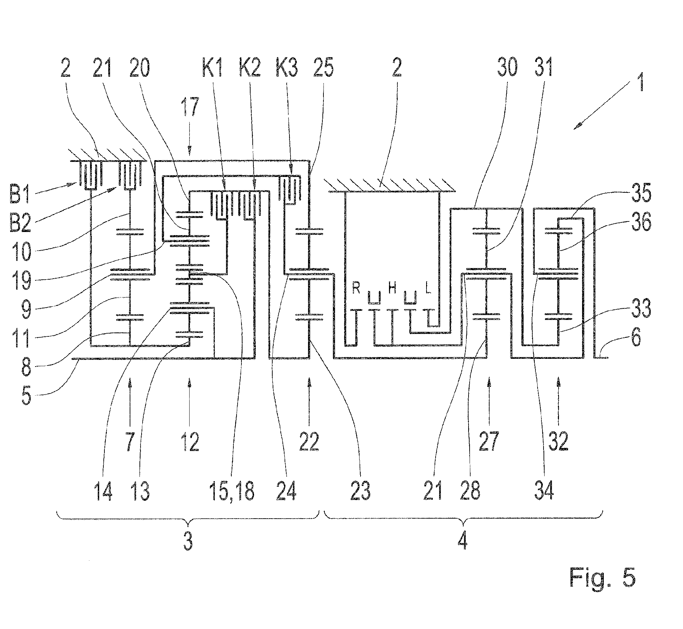

Eine weitere Variante des Kraftfahrzeuggruppengetriebes 1 zeigt Fig. 5, wobei sich das Ausführungsbeispiel der Fig. 5 vom Ausführungsbeispiel der Fig. 1 dadurch unterscheidet, dass die beiden Planetenradsätze 27 und 32 des Nachschaltgetriebes 4 nicht radial verschachtelt sondern vielmehr axial hintereinander positioniert sind. Auch in diesem Fall ist das Hohlrad 30 der fünften Planetenradstufe 27 fest an das Sonnenrad 33 der sechsten Planetenradstufe 32 gekoppelt, wobei diese beiden Bauteile jedoch getrennt ausgeführt sind.

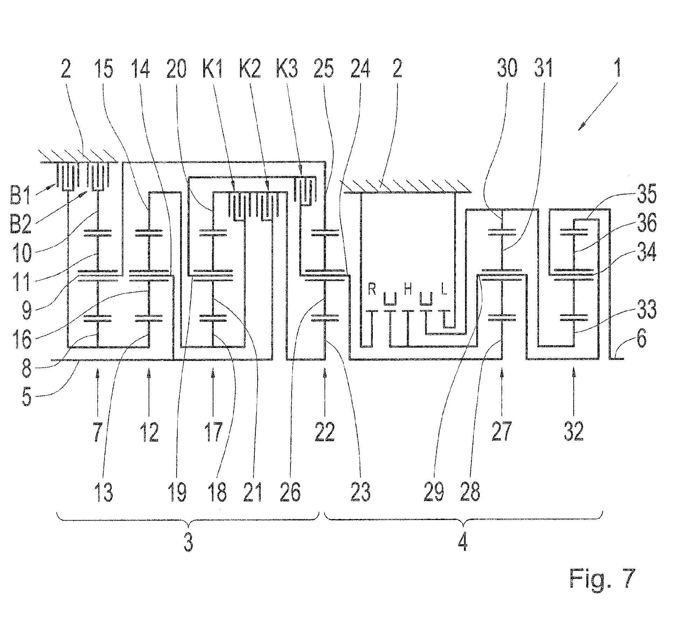

In der Variante der Fig. 7 ist im Vergleich zur Variante der Fig. 5 weiterhin vorgesehen, dass auch die beiden Planetenradstufen 12 und 17 des Hauptgetriebes 3 ebenso wie die Planetenradstufen 27 und 32 des Nachschaltgetriebes 4 nicht radial verschachtelt sondern vielmehr axial nebeneinander angeordnet sind. Dabei sind gemäß Fig. 4 Hohlrad 15 der zweiten Planetenradstufe 12 und Sonnenrad 18 der dritten Planetenradstufe 17 als separate Baugruppen ausgeführt und permanent aneinander gekoppelt.

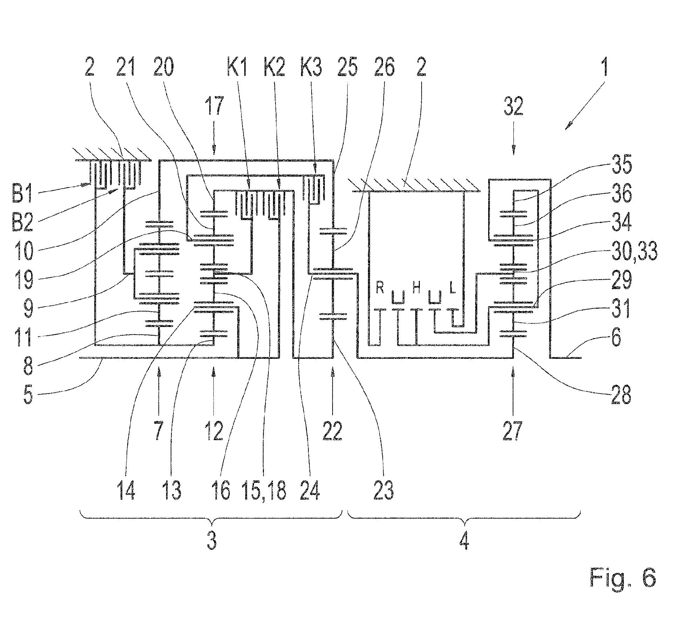

Eine weitere Variante der Fig. 1 zeigt Fig. 6, wobei sich die Variante der Fig. 6 von Fig. 1 dadurch unterscheidet, dass als erste Planetenradstufe 7 des Gruppengetriebes 3 ein Plus-Planetenradsatz verwendet wird. Dies ist dann möglich, wenn Hohlrad- und Steg-Anbindung vertauscht werden und der Betrag der Standgetriebeübersetzung um Eins erhöht wird.

So ist im Ausführungsbeispiel der Fig. 6 das zweite Schaltelement B2 zwischen dem Steg 9 der ersten Planetenradstufe 7 und das Gehäuse 2 geschaltet, wobei dann das Hohlrad 10 der ersten Planetenradstufe 7 permanent an das Hohlrad 25 der vierten Planetenradstufe 22 gekoppelt ist, und ferner das Sonnenrad 8 der ersten Planetenradstufe 7 unter Zwischenschaltung ausschließlich des ersten Schaltelements B1 an das Gehäuse 2 koppelbar ist.

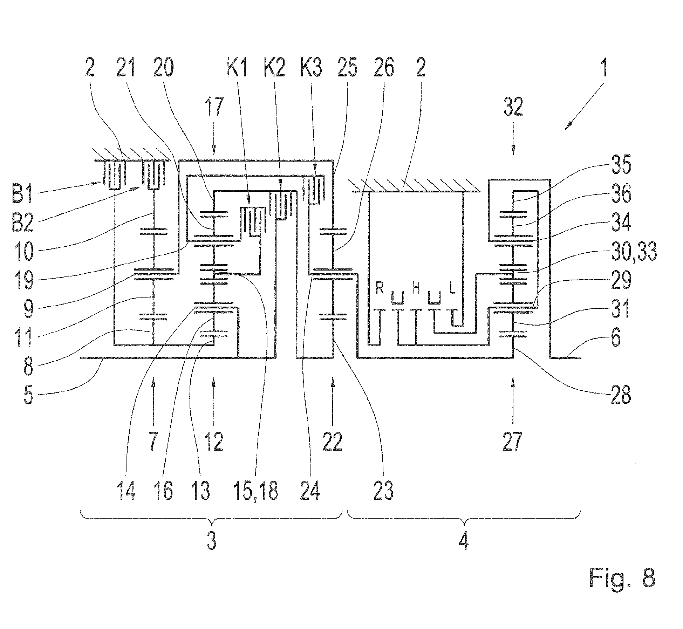

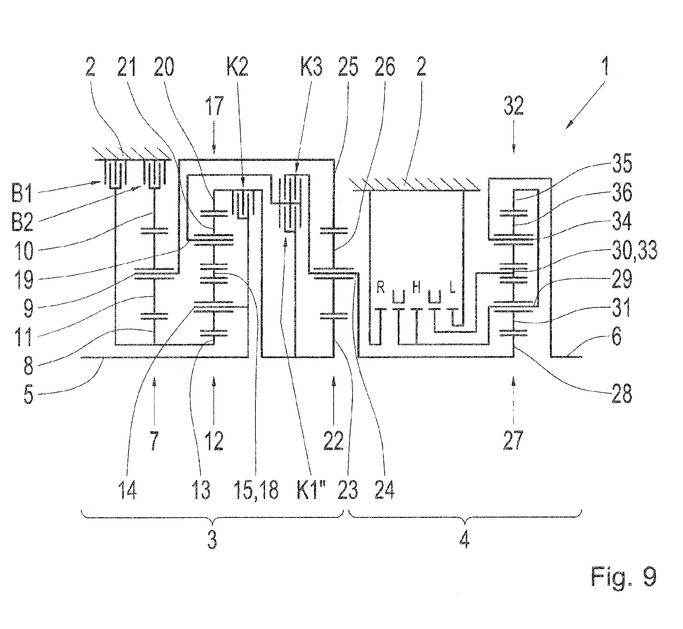

In den Ausführungsbeispielen der Fig. 1, 4 bis 7 ist das dritte Schaltelement K1 jeweils zwischen das Sonnenrad 18 der dritten Planetenradstufe 17 und das Hohlrad 20 derselben geschaltet. Demgegenüber zeigt Fig. 8 eine Variante der Erfindung, in welcher das Schaltelement K1' zwischen das Sonnenrad 18 der dritten Planetenradstufe 17 und den Steg 20 derselben geschaltet ist, so dass demnach dann, wenn dieses dritte Schaltelement K1 geschlossen ist, Sonnenrad 18 und Steg 19 der dritten Planetenradstufe 16 verblockt sind. Demgegenüber sind in den Ausführungsbeispielen der Fig. 1, 4 bis 7 bei geschlossenem Schaltelement K1 Sonnenrad 15 und Hohlrad 20 der dritten Planetenradstufe 12 verblockt. Nach einer Variante gemäß Fig. 9 ist das dritte Schaltelement K1" zwischen dem Steg 20 der dritten Planetenradstufe 17 und das Hohlrad 20 derselben geschaltet.

Zwei der drei Schaltelemente R, H und L können zu einem Doppelschaltelement zusammengefasst sein. So kann beispielsweise das Schaltelement H und das Schaltelement L zu einem Doppelschaltelement zusammengefasst sein, alternativ können die Schaltelemente R und H sowie die Schaltelemente R und L zu einem Doppelschaltelement zusammengefasst sein. So zeigt Fig. 1 ein Kraftfahrzeuggruppengetriebe 1, bei welchem die beiden Schaltelemente R und H zu einem Doppelschaltelement zusammengefasst sind.

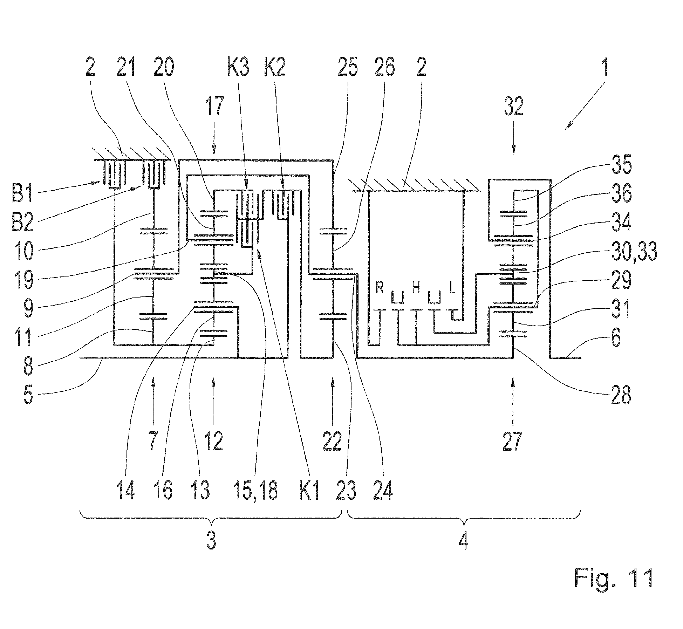

Weitere Ausgestaltungen des erfindungsgemäßen Kraftfahrzeuggruppengetriebes 1 zeigen Fig. 11, 12 und 13.

Das Ausführungsbeispiel der Fig. 1 unterscheidet sich vom Ausführungsbeispiel der Fig. 11 durch die Positionierung des fünften Schaltelements K3'.

So ist in der Variante der Fig. 11 das Schaltelement K3' zwischen das Hohlrad 20 der dritten Planetenradstufe 17 und das Sonnenrad 23 der vierten Planetenradstufe 22 geschaltet, wobei dann der Steg 19 der dritten Planetenradstufe 17 permanent an den Steg 24 der vierten Planetenradstufe 23 gekoppelt ist.

Das fünfte Schaltelement K3 kann demnach alternativ zu der Anordnung am Steg ebenso am Hohlrad oder auch an der Sonne (nicht gezeigt) angeordnet sein. Die Anordnung des Schaltelements K3 an der Sonne ist gegenüber der Anordnung desselben am Steg oder am Hohlrad weniger vorteilhaft, da hierdurch die Schaltbarkeit von der dritten Planetenradstufe 17 auf die zweite Planetenradstufe 12 erschwert wird.

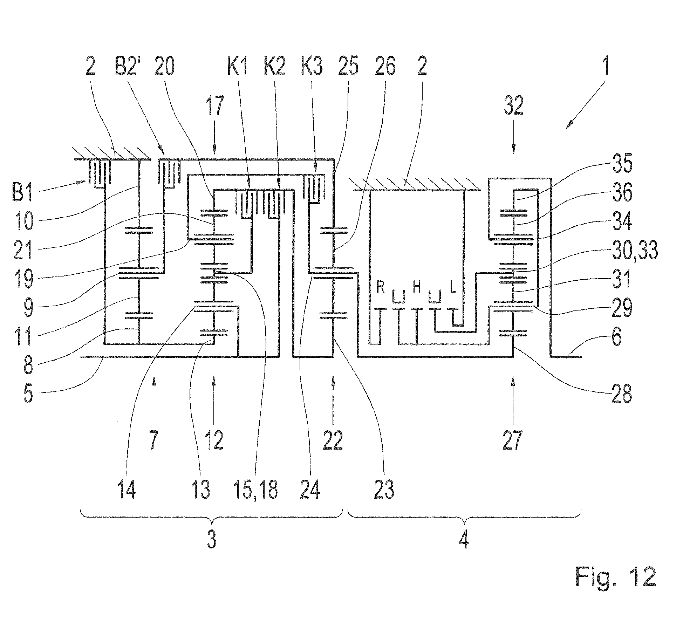

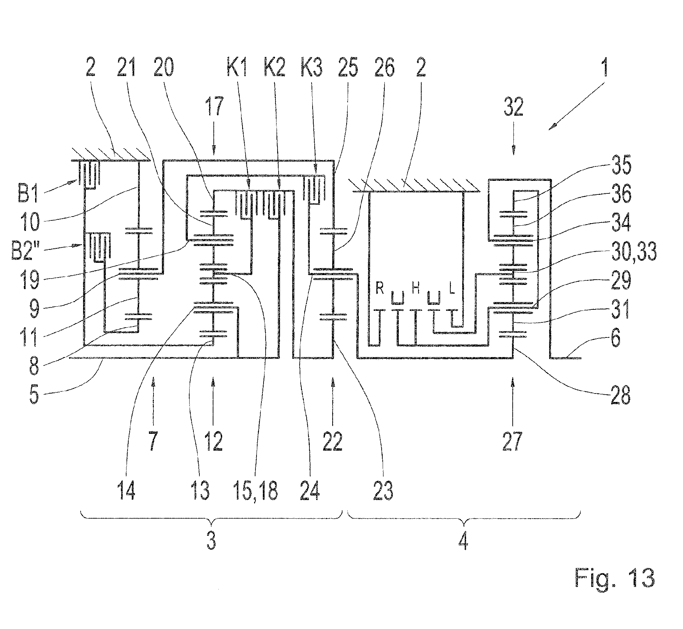

Fig. 12 und 13 zeigen Ausgestaltungen des erfindungsgemäßen Kraftfahrzeuggruppengetriebes 1, die sich von der Ausführungsform der Fig. 1 durch die Positionierung des zweiten Schaltelements B2 unterscheiden.

So ist in der Ausführungsform der Fig. 12 vorgesehen, dass das zweite Schaltelement B2' des Hauptgetriebes 3 zwischen dem Steg 9 der ersten Planetenradstufe 7 und das Hohlrad 25 der vierten Planetenradstufe 22 geschaltet ist. In diesem Fall ist dann das Hohlrad 10 der ersten Planetenradstufe 7 permanent an das Gehäuse 2 gekoppelt und ferner ist das Sonnenrad 8 der ersten Planetenradstufe 7 unter Zwischenschaltung ausschließlich des ersten Schaltelements B1 an das Gehäuse 2 koppelbar.

In der Ausführungsform der Fig. 13 ist das zweite Schaltelement B2" zwischen das Sonnenrad 8 der ersten Planetenradstufe 7 und das erste Schaltelement B1 geschaltet, so dass demnach das Sonnenrad 8 der ersten Planetenradstufe 7 nur dann an das Gehäuse 2 gekoppelt ist, wenn beide Schaltelemente B1 und B2" geschlossen sind. In diesem Fall ist dann das Hohlrad 10 der ersten Planetenradstufe 7 permanent an das Gehäuse 2 gekoppelt, ferner ist der Steg 9 der ersten Planetenradstufe 7 permanent an das Hohlrad 25 der vierten Planetenradstufe 22 gekoppelt.

In allen gezeigten Ausführungsvarianten handelt es sich bei der ersten Planetenradstufe 7 des Hauptgetriebes 3 um diejenige Planetenradstufe des Kraftfahrzeuggruppengetriebes 1, die an einem antriebsseitigen Ende des Gehäuses 2 positioniert ist.

Bei der vierten Planetenradstufe 22 handelt es sich um diejenige Planetenradstufe des Kraftfahrzeuggruppengetriebes 1, die benachbart zu einen abtriebsseitigen Endes des Hauptgetriebes 3 positioniert ist.

Die zweite Planetenradstufe 12 und die dritte Planetenradstufe 17 des Hauptgetriebes 3 sind zwischen der ersten Planetenradstufe 7 und der vierten Planetenradstufe 22 positioniert, entweder radial verschachtelt oder axial hintereinander.

Die beiden Planetenradstufen 27 und 32 der Nachschaltgruppe 4 sind benachbart zu einem abtriebsseitigen Ende des Gehäuses 2 angeordnet, und zwar entweder radial verschachtelt oder axial hintereinander, wobei dann, wenn die beiden Planetenradstufen 27 und 32 des Nachschaltgetriebes 4 axial hintereinander angeordnet sind, die sechste Planetenradstufe 32 benachbart zum abtriebsseitigen Ende des Gehäuses 2 positioniert ist.

Diese geometrischen Lagen der Planetenradstufen sind zur Gewährleistung einer kompakten Bauform besonders. Es können jedoch alle geometrischen Lagen der Planetenradstufen variiert werden, solange die Anbindbarkeit der Elemente dies zulässt.

Die Gruppengetriebe der Fig. 4 bis 13 können ebenso wie das Gruppengetriebe der Fig. 1 die Schaltmatrizen der Fig. 2 und 3 nutzen.

Sämtliche Kraftfahrzeuggruppengetriebe 1 zeichnen sich jeweils durch einen guten Verzahnungswirkungsgrad, einen geringen Bauaufwand, eine kompakte Bauweise und eine hohe Anzahl an Gängen bei nahezu geometrischer Gangstufung aus. Es kann jeweils eine hohe Spreizung der Gänge realisiert werden. Es können jeweils mehrere Rückwärtsgänge genutzt werden.

### Bezugszeichen

- 1: Kraftfahrzeuggruppengetriebe
- 2: Gehäuse
- 3: Hauptgetriebe
- 4: Nachschaltgetriebe
- 5: Welle
- 6: Welle
- 7: Planetenradstufe / Planetenradsatz
- 8: Sonnenrad
- 9: Steg
- 10: Hohlrad
- 11: Planetenrad
- 12: Planetenradstufe / Planetenradsatz
- 13: Sonnenrad
- 14: Steg
- 15: Hohlrad
- 16: Planetenrad
- 17: Planetenradstufe / Planetenradsatz
- 18: Sonnenrad
- 19: Steg
- 20: Hohlrad
- 21: Planetenrad
- 22: Planetenradstufe / Planetenradsatz
- 23: Sonnenrad
- 24: Steg
- 25: Hohlrad
- 26: Planetenrad
- 27: Planetenradstufe / Planetenradsatz
- 28: Sonnenrad
- 29: Steg
- 30: Hohlrad
- 31: Planetenrad
- 32: Planetenradstufe / Planetenradsatz
- 33: Sonnenrad
- 34: Steg
- 35: Hohlrad
- 36: Planetenrad
- B1: Schaltelement
- B2, B2', B2": Schaltelement
- K1: Schaltelement
- K2: Schaltelement
- K3, K3': Schaltelement
- K4: Schaltelement
- R: Schaltelement
- H: Schaltelement
- L: Schaltelement

## Patentansprüche

1. Kraftfahrzeuggruppengetriebe (1) mit zumindest einem Gehäuse (2), einem Hauptgetriebe (3), und einem dem Hauptgetriebe (3) nachgeschalteten Nachschaltgetriebe (4); wobei das Hauptgetriebe (3) mindestens vier Planetenradsätze (7, 12, 17, 22), die jeweils ein Sonnenrad (8, 13, 18, 23), einen Steg (9, 14, 19, 24), ein auf dem Steg (9, 14, 19, 24) gelagertes Planetenrad (11, 16, 21, 26) und ein Hohlrad (10, 15, 20, 25) aufweisen, und mindestens fünf Schaltelemente (B1, B2, K1, K2, K3) umfasst; wobei das Nachschaltgetriebe (4) mindestens zwei Planetenradsätze (27, 32), die jeweils ein Sonnenrad (28, 33), einen Steg (29, 34), ein auf dem Steg (29, 34) gelagertes Planetenrad (31, 36) und ein Hohlrad (30, 35) aufweisen, und mindestens drei Schaltelemente (R, L, H) umfasst; wobei das Hauptgetriebe (3) und das Nachschaltgetriebe (4) zusammen in Kombination mindestens dreizehn Vorwärtsgange und mindestens acht Rückwärtsgänge bereitstellen.

2. Kraftfahrzeuggruppengetriebe nach Anspruch 1, **dadurch gekennzeichnet, dass**
ein Sonnenrad (8) eines dem Hauptgetriebe (3) zugeordneten ersten Planetenradsatzes (7) unter Zwischenschaltung eines dem Hauptgetriebe (3) zugeordneten ersten Schaltelements (B1) an das Gehäuse (2) koppelbar ist;
ein Steg (14) eines dem Hauptgetriebe (3) zugeordneten zweiten Planetenradsatzes (12) permanent an eine antriebsseitige Welle (5) des Kraftfahrzeuggruppengetriebes gekoppelt ist;
ein Hohlrad (15) des zweiten Planetenradsatzes (12) permanent an ein Sonnenrad (18) eines dem Hauptgetriebe (3) zugeordneten dritten Planetenradsatzes (17) gekoppelt ist;
ein Steg (24) eines dem Hauptgetriebe (3) zugeordneten vierten Planetenradsatzes (23) permanent an ein Sonnenrad (28) eines dem Nachschaltgetriebe (4) zugeordneten fünften Planetenradsatzes (27) gekoppelt ist;
ein Hohlrad (30) des fünften Planetenradsatzes (27) permanent an ein Sonnenrad (33) eines dem Nachschaltgetriebe (3) zugeordneten sechsten Planetenradsatzes (32) und ein Steg (29) des fünften Planetenradsatzes (27) permanent an ein Hohlrad (35) des sechsten Planetenradsatzes (32) gekoppelt ist;
ein Steg (34) des sechsten Planetenradsatzes (27) permanent an eine abtriebsseitige Welle (5) des Kraftfahrzeuggruppengetriebes gekoppelt ist;
ein, dem Hauptgetriebe (3) zugeordnetes zweites Schaltelement (B2, B2', B2"), wenn der erste Planetenradsatz (7) als Minus-Planetenradsatz ausgeführt ist, entweder zwischen ein Hohlrad (10) des ersten Planetenradsatzes (7) und das Gehäuse (2) oder zwischen den Steg (9) des ersten Planetenradsatzes (7) und das Hohlrad (25) des vierten Planetenradsatzes (22) oder zwischen das Sonnenrad (8) des ersten Planetenradsatzes (7) und das erste Schaltelement (B1) geschaltet ist, oder wenn der erste Planetenradsatz (7) als Plus-Planetenradsatz ausgeführt ist, entweder zwischen den Steg (9) des ersten Planetenradsatzes (7) und das Gehäuse (2), oder zwischen das Hohlrad (10) des ersten Planetenradsatzes (7) und das Hohlrad (25) des vierten Planetenradsatzes (22), oder zwischen das Sonnenrad (8) des ersten Planetenradsatzes (7) und das erste Schaltelement (B1) geschaltet ist;
ein dem Hauptgetriebe (3) zugeordnetes drittes Schaltelement (K1, K1 K1") entweder zwischen das Sonnenrad (18) des dritten Planetenradsatzes (17) und das Hohlrad (20) des dritten Planetenradsatzes (17) oder zwischen das Sonnenrad (18) des dritten Planetenradsatzes (17) und den Steg (19) des dritten Planetenradsatzes (17) oder zwischen den Steg (19) des dritten Planetenradsatzes (17) und das Hohlrad (20) des dritten Planetenradsatzes (17) geschaltet ist;
ein dem Hauptgetriebe (3) zugeordnetes viertes Schaltelement (K2) zwischen das Hohlrad (20) des dritten Planetenradsatzes (17) und die antriebsseitige Welle (5) des Kraftfahrzeuggruppengetriebes geschaltet ist;
ein dem Hauptgetriebe (3) zugeordnetes fünftes Schaltelement (K3, K3') entweder zwischen den Steg (19) des dritten Planetenradsatzes (17) und den Steg (24) des vierten Planetenradsatzes (22) oder zwischen das Hohlrad (20) des dritten Planetenradsatzes (17) und das Sonnenrad (23) des vierten Planetenradsatzes (22) geschaltet ist;
der Steg (29) des fünften Planetenradsatzes (27) und das Hohlrad (30) des fünften Planetenradsatzes (27) abhängig von Schaltelementen (R, H, L) des Nachschaltgetriebes (4) entweder an das Gehäuse (2) oder untereinander gekoppelt sind.

3. Kraftfahrzeuggruppengetriebe nach Anspruch 2, **dadurch gekennzeichnet, dass** dann, wenn das zweite Schaltelement (B2) zwischen das Hohlrad (10) des ersten Planetenradsatzes (7) und das Gehäuse (2) geschaltet ist, der Steg (9) des ersten Planetenradsatzes (7) permanent an das Hohlrad (25) des vierten Planetenradsatzes (22) gekoppelt ist und ferner das Sonnenrad (8) des ersten Planetenradsatzes (7) unter Zwischenschaltung ausschließlich des ersten Schaltelements (B1) an das Gehäuse (2) koppelbar ist.

4. Kraftfahrzeuggruppengetriebe nach Anspruch 2, **dadurch gekennzeichnet, dass** dann, wenn das zweite Schaltelement (B2) zwischen den Steg (9) des ersten Planetenradsatzes (7) und das Gehäuse (2) geschaltet ist, das Hohlrad (10) des ersten Planetenradsatzes (7) permanent an das Hohlrad (25) des vierten Planetenradsatzes (22) gekoppelt ist und ferner das Sonnenrad (8) des ersten Planetenradsatzes (7) unter Zwischenschaltung ausschließlich des ersten Schaltelements (B1) an das Gehäuse (2) koppelbar ist.

5. Kraftfahrzeuggruppengetriebe nach Anspruch 2, **dadurch gekennzeichnet, dass** dann, wenn das zweite Schaltelement (B2') zwischen den Steg (9) des ersten Planetenradsatzes (7) und das Hohlrad (25) des vierten Planetenradsatzes (22) geschaltet ist, das Hohlrad (10) des ersten Planetenradsatzes (7) permanent an das Gehäuse (2) gekoppelt ist und ferner das Sonnenrad (8) des ersten Planetenradsatzes (7) unter Zwischenschaltung ausschließlich des ersten Schaltelements (B1) an das Gehäuse (2) koppelbar ist.

6. Kraftfahrzeuggruppengetriebe nach Anspruch 2, **dadurch gekennzeichnet, dass** dann, wenn das zweite Schaltelement (B2") zwischen das Sonnenrad (8) des ersten Planetenradsatzes (7) und das erste Schaltelement (B1) geschaltet ist, das Hohlrad (10) des ersten Planetenradsatzes (7) permanent an das Gehäuse (2) gekoppelt ist und ferner der Steg (9) des ersten Planetenradsatzes (7) permanent an das Hohlrad (25) des vierten Planetenradsatzes (22) gekoppelt ist.

7. Kraftfahrzeuggruppengetriebe nach einem der Ansprüche 2 bis 6, **dadurch gekennzeichnet, dass** dann, wenn das fünfte Schaltelement (K3) zwischen den Steg (19) des dritten Planetenradsatzes (17) und den Steg (24) des vierten Planetenradsatzes (22) geschaltet ist, das Hohlrad (20) des dritten Planetenradsatzes (17) permanent an das Sonnenrad (23) des vierten Planetenradsatzes (22) gekoppelt ist.

8. Kraftfahrzeuggruppengetriebe nach einem der Ansprüche 2 bis 6, **dadurch gekennzeichnet, dass** dann, wenn das fünfte Schaltelement (K3') zwischen das Hohlrad (20) des dritten Planetenradsatzes (17) und das Sonnenrad (23) des vierten Planetenradsatzes (22) geschaltet ist, der Steg (19) des dritten Planetenradsatzes (17) permanent an den Steg (24) des vierten Planetenradsatzes (23) gekoppelt ist.

9. Kraftfahrzeuggruppengetriebe nach einem der Ansprüche 2 bis 8, **dadurch gekennzeichnet, dass**
der erste Planetenradsatz (7) benachbart zu einem antriebsseitigen Ende des Hauptgetriebes (3) positioniert ist;
der vierte Planetenradsatz (22) benachbart zu einem abtriebsseitigen Ende des Hauptgetriebes (3) positioniert ist;
der zweite Planetenradsatz (12) und der dritte Planetenradsatz (17) zwischen dem ersten Planetenradsatz (7) und dem vierten Planetenradsatz (22) positioniert sind.

10. Kraftfahrzeuggruppengetriebe nach einem der Ansprüche 1 bis 9, **dadurch gekennzeichnet, dass** die Schaltelemente (B1, B2, K1, K2, K3, K4) des Hauptgetriebes (3) reibschlüssige Schaltelemente sind, und dass die Schaltelemente (R, L, H) des Nachschaltgetriebes (4) formschlüssige Schaltelemente sind.
